(19) Europäisches Patentamt
European Patent Office
Office européen des brevets

(11) Publication number: **0 025 200 B1**

(12) **EUROPEAN PATENT SPECIFICATION**

(45) Date of publication of patent specification: **04.07.84**

(51) Int. Cl.³: **C 08 F 283/08**, C 08 F 2/34

(21) Application number: **80105169.9**

(22) Date of filing: **29.08.80**

(54) **Process for preparing polyphenylene oxide graft copolymers.**

(30) Priority: **30.08.79 JP 111177/79**

(43) Date of publication of application:
**18.03.81 Bulletin 81/11**

(45) Publication of the grant of the patent:
**04.07.84 Bulletin 84/27**

(84) Designated Contracting States:
**BE DE FR GB IT NL**

(56) References cited:
**FR - A - 2 243 213**

**CHEMICAL ABSTRACTS, vol. 84, no. 12, 22nd March 1976, page 22, no. 74892y Columbus, Ohio, U.S.A.**

(73) Proprietor: **KANEGAFUCHI KAGAKU KOGYO KABUSHIKI KAISHA**
**2-4 Nakanoshima 3-chome**
**Kita-ku Osaka-shi (JP)**

(72) Inventor: **Miyashita, Shunitsu**
**1-3, 1-chome, Yoshida-cho Hyogo-ku**
**Kobe-shi Hyogo-ken (JP)**
Inventor: **Azuma, Masaaki**
**Sanseiso, 96-1 Aza-Takigahira Shioya-cho**
**Tarumi-ku Kobe-shi Hyogo-ken (JP)**
Inventor: **Somemiya, Akiyoshi**
**440-19, Higashiyama Ohkuradani**
**Akashi-shi Hyogo-ken (JP)**

(74) Representative: **Vossius Vossius Tauchner Heunemann Rauh**
**Siebertstrasse 4 P.O. Box 86 07 67**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 025 200 B1

**Description**

This invention relates to a process for the preparation of modified polyphenylene ethers, in particular to a process for preparing polyphenylene oxide graft copolymers with improved mechanical and chemical properties.

Polyphenylene oxides, also known as poly (oxyphenylenes) or poly (phenylene ethers) exhibit comparatively high softening points. These polymers belong to the class of thermoplastic resins which are used in fields where thermal resistance is required. However, polyphenylene oxides in some cases show insufficient impact resistance and workabilty.

Various methods have been proposed in order to improve polyphenylene oxide resins. With regard to impact resistance, a method of modifying a polyphenylene oxide with rubber has been proposed. For example, in Japanese patent publications No. 1482/1968 and No. 32730/1972 processes are disclosed wherein rubber is mechanically added to a polyphenylene oxide in a molten state. According to Japanese patent publication No. 47389/1978 homogeneously mixed microparticles are obtained by dissolving a polyphenylene oxide and polybutadiene in a suitable solvent and then gradually adding the solution to a solvent in which they are insoluble. However, these methods are blending processes only. From the viewpoint of compatability of rubber with a polyphenylene oxide, it cannot be said that the characteristics of rubber are sufficiently utilized in these polymer blends. In order to remedy these deficiencies in Japanese published patent application No. 9098/1977 a process for the preparation of rubber modified polyphenylene oxides is described in which rubber is chemically combined with a polyphenylene oxide by polymerizing a phenol by oxidative coupling in the presence of the rubber. The modified polyphenylene oxides obtained acording to this method show a remarkable improvement in elongation, impact strength and fatigue strength. However, the reaction process and refining process of this method are complicated because the method requires reaction between the rubber and a phenol in the presence of a Friedel-Crafts catalyst.

On the other hand, methods wherein resins having excellent fluidity are blended or methods wherein low molecular additives are added are used as a rule in order to improve the workability of the resins. The latter method leads to a bleeding of the additives from the resin, thereby staining the surface of molded products. According to this method, the mechanical properties of the resin are sometimes remarkably lowered. According to Japanese patent publication No. 17812/1968 polystyrene having excellent compatibility with polyphenylene oxides is used to improve the workability by blending the resins which have excellent fluidity. Furthermore it is known from Japanese published patent application No. 126800/1975 to graft monomeric styrene containing compounds polymerizable according to a free radical mechanism to polyphenylene oxides.

The resin compositions obtained by merely blending different kinds of resin are remarkably different from the polymer obtained by grafting in mechanical properties. The latter is superior to the former. According to Japanese published patent application No. 126800/1975 the graft polymerization is carried out in a temperature range of from 130 to 200°C in the presence of a radical initiator. The resulting graft copolymer is said to contain no polyphenylene oxide homopolymer and it has improved characteristics such as workability or thermal resistance.

However, this method is likely to cause side-reactions because the graft polymerization is carried out at a comparatively high temperature such as 130°C or more. At this high temperature also a thermally induced polymerization is likely to occur. Furthermore, it is difficult to obtain graft copolymers having a high polymerization degree of grafting branches and a sufficient chain transfer onto the polyphenylene oxide backbone is difficult to produce at a polymerization temperature of 100°C or less. In other words the grafting efficiency is low. Thus it is desired to develop a graft copolymerization with polyphenylene oxides showing a high grafting efficiency even at comparatively low temperatures.

Finally it is known from Japanese published patent application No. 41383/1971 to prepare polyphenylene oxide graft copolymers by subjecting alkali metal salts of polyphenylene oxides to an anionic graft copolymerization. This method is technically not convenient because it includes an ionic polymerization which is adversely affected by the presence of water, oxygen and other impurities contained in the polymerization system.

The inventors investigates a variety of methods of preparing modified polyphenylene oxides by graft copolymerizing a variety of compounds with polyphenylene oxides in order to develop an industrially advantageous process having a superior grafting efficiency even at comparatively low temperatures. As a result, the inventors found that the above described object can be attained by graft copolymerizing compounds polymerizable according to a free radical mechanism in the gaseous phase in the presence of radical polymerization initiators which act effectively at said graft polymerization temperatures on a polyphenylene oxide backbone. According to the method of the present invention, graft copolymers can be obtained with high grafting efficiency as well as a high grafting degree even when working at compatively low temperatures. The invention, therefore, relates to a process for the preparation of polyphenylene oxide graft copolymers as explained in the claims.

Thus polyphenylene oxide graft copolymers obtainable according to the process of this invention contain only small amounts of the homopolymers and exhibit remarkably improved characteristics with regard to resistance to stress cracking, tensile strength, break or yield strength and chemical resistance

such as oil-resistivity owing to the high grafting efficiency. Table 1 shows the break strength of molded test specimens made by pressing a resin sample obtained according to reference example 1 and example 10. Polystyrene (Estyrene G-20 manufactured by Nippon Steel Chemical Co. Ltd.) was added to the polymer obtained in example 10 in order to obtain the same polystyrene content as in the resin sample of reference example 1.

Table 1

| | Reference Example 1[a)] | Example 10[b)] |
|---|---|---|
| break strength ($kg/cm^2$) | 723 | 866 |

a) polystyrene content 52%;
b) styrene content 25.9% + 26.10% polystyrene added.

The measurements were carried out in accordance with ASTM D638.

According to the present invention, polyphenylene oxide graft copolymers having high molecular grafted branches can be obtained. The molecular weight of the grafted portion can be freely controlled over a wide range from high molecular to low molecular weights by selecting the reaction conditions. Furthermore, the method of the present invention is simple and industrially very useful because this polymerization method consists of a process in which radical polymerization initiators are added to the solid polyphenylene oxide and the compounds polymerizable according to a free radical mechanism are introduced in gaseous form.

Thus the present invention relates to a process for the production of polyphenylene oxide graft copolymers by graft polymerization of a substantially solid polyphenylene oxide previously blended with an organic or inorganic radical initiator with at least one compound polymerizable according to a free radical mechanism (referred to hereinafter as monomer or grafting monomer) on the condition that at least one monomer in the gaseous state is passed over solid polyphenylene oxide.

The polyphenylene oxides used in the present invention have recurring structural units of the formula:

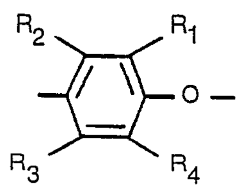

wherein $R_1$, $R_2$, $R_3$ and $R_4$ are each hydrogen atoms, halogen atoms, hydrocarbon groups, substituted hydrocarbon groups, hydrocarbonoxy groups, substituted hydrocarbonoxy groups, amino groups or substituted amino groups. These polyphenylene oxides are either known or can be prepared according to known methods. Preferred polyphenylene oxides to be used in the present invention include poly (2,6-dimethylphenylene-1,4-ether), poly (2,6-diethylphenylene-1,4-ether), poly (2,6-dipropylphenylene-1,4-ether), poly (2-methyl-6-allylphenylene-1,4-ether), poly (2,6-dimethoxyphenylene-1,4-ether), poly (2-methyl-6-chlorphenylene-1,4-ether), poly (2,6-dichloromethylphenylene-1,4-ether), poly (2-methyl-6-bromophenylene-1,4-ether), poly (2,5-dimethylphenylene-1,4-ether), poly (2,6-phenylphenylene-1,4-ether) or copolymers of these. Polyphenylene oxides having a molecular weight ($M_n$) of from 1200 to 200 000, preferably from 3000 to 100 000, most preferably from 9600 to 70 000 (corresponding to $[\eta]$ in chloroform at 25°C of from 0.07 to 2—8, from 0.13 to 1.7 and from 0.30 to 1.3, respectively) are most suitable.

The polymerization degree should have a value of at least 10, preferably at least 25. Graft polymerization becomes difficult with a decrease of n in the graft polymerization of a polyphenylene oxide according to a radical mechanism by means of the compounds dissolving the polyphenylene oxide such as disclosed in Japanese patent publication No. 47862/1972 and Japanese patent publication No. 126800/1975; especially where n is 60 or less this tendency is remarkable. According to the method of the present invention, the effect of the value n on graft polymerization is negligible if n is 10 or more.

The polyphenylene oxides may be used in the form of a powder, as beads or as pellets in the process of the invention. Preferably the polyphenylene oxides are used in the form of a powder having great porosity, in particular in cases when extensive grafting is required.

Organic or inorganic free radical generators employed in conventional radical polymerization may be used as polymerization initiators in the process of the present invention. Typical examples are t-butylhydroperoxide cumene hydroperoxide, methylethylketoneperoxide, di-t-butyl peroxide, dicumyl peroxide, acetyl peroxide, lauroyl peroxide, benzoyl peroxide, t-butyl peroxyacetate, t-butyl peroxy-

benzoate, α,α'-azobisisobutyronitrile, potassium persulfate and ammonium persulfate. Two or more of the initiators may also be used jointly. The initiators are used in a weight ratio of from 0.2 to 30 parts, preferably from 0.5 to 20 parts per 100 parts polyphenylene oxide. The graft copolymerization does not proceed satisfactorily and consequently the graft copolymers cannot be obtained if said initiators are used in a weight ratio of 0.2 parts only per 100 parts polyphenylene oxide. On the other hand, it is less economical and the modifying efficiency is lowered if the initiators are used in a weight ratio of 20 parts or more per 100 parts polyphenylene oxide. Preferably the graft copolymers are prepared with the smallest amount of the initiator which still gives a satisfactory graft copolymer. According to the present invention, the graft polymerization is hardly influenced by a hindering action due to the terminal groups of the polyphenylene oxides, and consequently one may use smaller amounts of initiators than in the known methods for graft polymerization which are effected in solvents.

Although the intiators may be addded to the polyphenylene oxide merely by mixing and stirring, the method wherein a solution of the initiator in a solvent in which the polyphenylene oxide is insoluble is added to the polyphenylene oxide and then the solvent is removed, is preferred.

The grafting monomers used in the present invention are compounds containing at least one ethylenically unsaturated double bond and having up to about 15 carbon atoms. Especially preferred are aromatic vinyl compounds such as styrene, alkyl (metha)acrylates having from 1 to 8 carbon atoms in the alkyl group, (meth)acrylonitrile and carboxylic acids such as acrylic acid, methacrylic acid or maleic anhydride.

At least one of the monomers in the gaseous state is graft copolymerized to the polyphenylene oxide. The rate of the graft copolymerization is low when the monomers have a lower vapour pressure. Although the graft copolymerization is possible as long as said compounds have vapour pressures, at least one of the monomers should have a vapour pressure of at least 0.066 bar, preferably at least 0.13 bar at the polymerization temperature. Typical examples of such monomers are vinylchloride, vinylidene chloride, vinyl acetate, styrene, α-methylstyrene, 2,4-dimethylstyrene, p-chlorostyrene, acrylonitrile, α-methacrylonitrile, acrylic acid, methyl acrylate, ethyl acrylate, butyl acrylate, methyl methacrylate, ethyl methacrylate, 1,3-butadiene, isoprene, chloroprene, ethylene, propylene, butene-1 vinyl naphthalene, maleic anhydride and N-vinylcarbozol.

Especially preferred are styrene, α-methylstyrene, 2,4-dimethylstyrene, p-chlorostyrene, acrylonitrile, α-methacrylonitrile, acrylic acid, methyl acrylate, ethyl acrylate, butyl acrylate, methyl methacrylate, ethyl methacrylate, 1,3-butadiene and maleic anhydride.

The grafting monomers may be used alone or as a mixture consisting of two or more of them. Preferably the grafting monomer contains at least 5% by weight of an aromatic vinyl compound.

The weight ratio of grafting monomer(s) to polyphenylene oxide is preferably at least 5:100. In general it is advantageous to use the grafting monomer(s) in such an amount that the obtained graft copolymers contain the grafting components in a ratio of from 5 to 95 weight %, preferably from 10 to 90 weight % and most preferably from 10 to 75 weight %.

The process according to the present invention can be performed in various ways, e.g. a batch type or circulation type process.

The graft copolymerization may be carried out at temperatures from 20 to 150°C, preferably from 50 to 130°C and most preferably from 60 to 100°C. Side reactions may occur in some cases when the polymerization reaction is carried out at comparatively high temperatures, depending on the kind of monomer(s) used. The polymerization temperature depends on the vapour pressure of the grafting monomers used and the decomposition temperature of the initiators.

The present invention relates to the graft copolymerization of a substantially solid polyphenylene oxide with the grafting monomers in gaseous form. Solvents which do not detrimentally affect the radical polymerization such as benzene, ethyl benzene, toluene, xylene, carbon tetrachloride or chloroform, in a ratio of up to 10 parts per 100 parts polyphenylene oxide sometimes lead to an accelerated graft copolymerization. Such solvents can easily be selected in consideration of the initiator, the monomer and the desired graft copolymers.

Polyphenylene oxide powders which do not agglomerate can be obtained by pretreating the polyphenylene oxide powder with a solvent such as toluene in said ratio in vaporized form. Substantially solid non-agglomerating polyphenylene oxide powders can also be obtained if said solvents are added to the polyphenylene oxide powders using a mixer.

Although the polymerization degree of the grafted branches can be controlled, e.g. by adjusting the amount of the initiator and the polymerization temperature, it may be controlled by the use of conventional chain transfer agents. Typical chain transfer agents include include mercaptanes and alcohols.

## Reference example 1

50 g of poly-2,6-dimethylphenylene-1,4-ether ($\eta = 0.48$ in chloroform at 25°C) and 50 g of ethylbenzene are charged into a 500 ml flask equipped with a thermometer, a reflux condenser, a nitrogen-inlet pipe and a sealed stirrer. The flask is heated in an oil bath to 120°C. Then nitrogen gas is passed through the flask to replace the air. After the addition of 4 g of di-t-butyl peroxide the mixture is heated at 120°C for 2 hours while stirring. Then 80 g of styrene are added to the reaction mixture. The

reaction mixture is heated at 130°C for 2 hours while stirring. After completion of polymerization the reaction mixture is poured into 100 times its weight of chloroform. Then the mixture is stirred for 4 hours at room temperature. A small amount of insoluble material is filtered off. Methanol is added dropwise to the filtrate in an amount 5 times the amount of the choroform solution. The resulting precipitate is filtered off and dried under reduced pressure for 3 hours at 160°C. The polymer contains 52% by weight polystyrene.

3.00 g of this polymer are extracted with methyl ethylketone in a Soxhlet extractor to remove free polystyrene. Free polystyrene is the polymer which is not graft copolymerized to poly-2,6-dimethylphenylene-1,4-ether. 0.81 g of free polystyrene is obtained. Therefore, the

grafting degree is 51.8% and the
grafting efficiency is 48.0%.

Grafting degree and grafting efficiency are calculated as follows:

Grafting degree = (the amount of polystyrene grafted/the amount of poly-2,6-dimethylphenylene-1,4-ether) × 100

Grafting efficiency = (the amount of polystyrene grafted/the amount of polystyrene polymerized) × 100

2.00 g of the extracted graft copolymer are dissolved in 40 ml of methylene chloride and the solution is left to stand at 23°C. After 24 hours the resulting precipitate is filtered off and dried. The yield is 1.34 g. The IR-absorption spectrum of this precipitate shows the presence of polystyrene.

Reference Example 2

100 g of poly-2,6-dimethylphenylene-1,4-ether ($\eta = 0.48$ in chloroform at 25°C) and 60 g of ethylbenzene are charged into a 300 ml autoclave. The autoclave content is evacuated by means of a vacuum pump and then heated and stirred. Then 4 g of di-t-butyl peroxide and 40 g of styrene are added to the melt and the mixture is heated at 165°C for 2 hours. After completion of polymerization the reaction mixture is dissolved in 100 times its weight of chloroform. A small amount of insoluble material is filtered off. To the filtrate methanol is added and the polymer is precipitated, filtered and dried in the same way as in Reference example 1. The polymer contains 2.7% by weight of polystyrene. The content of free polystyrene is measured in the same way as in Reference example 1.

Free polystyrene content is 14.7% by weight.
Grafting degree is 16.9%.
Grafting efficiency is 54.3%.

This polymer is dissolved in methylene chloride in the same way as in Reference example 1. After 48 hours 1.65 g of a precipitate are obtained. The IR-absorption spectrum of this precipitate shows the presence of polystyrene.

Examples 1 to 5

About 30 ml of an acetone solution of a polymerization initiator are added to 2.00 g of poly-2,6-dimethylphenylene-1,4-ether powder (about 0.6 mm). The mixture is stirred. Acetone is completely removed from the mixture at 50°C. A reaction tube made of glass having an internal diameter of 12 mm and a length of 150 mm containing poly-2,6-dimethylphenylene-1,4-ether in which the initiator is adsorbed is immersed in an oil bath adjusted to the polymerization temperature. Styrene vapour is introduced into one end of the reaction tube, while the reaction tube is deaerated from its outlet by means of a vacuum pump. The styrene vapour has the same temperature as the polymerization temperature. Polymerization is continued for 5 hours.

Thereafter the reaction product is washed with methanol and then dried under a vacuum at 160°C for 4 hours. Polystyrene content, grafting degree and grafting efficiency are determined in the same way as in Reference example 1 for the polymer obtained. Table 2 shows the results of examples 1 to 5 obtained under various conditions using different kinds and amounts of initiators, polymerization temperatures and poly-2,6-dimethylphenylene-1,4-ethers.

TABLE 2

| Example | Radical polymerization initiator | Amount of radical polymerization initiator (by weight) (%) | Polymerization temperature (°C) | $[\eta]$ (in choro-form at 25°C) of poly-2,6-dimethyl-phenylene-1,4-ether | Styrene content of the polymer (%) | Grafting degree of styrene (%) | Grafting efficiency of styrene (%) | Precipitation from the methylene chloride solution |
|---|---|---|---|---|---|---|---|---|
| 1 | Benzoyl peroxide | 5 | 65 | 0.72 | 21.5 | 23.6 | 86.2 | not found after 48 hours |
| 2 | Benzoyl peroxide | 5 | 110 | 0.44 | 27.5 | 31.7 | 83.7 | " |
| 3 | t-Butyl peroxy-benzoate | 4 | 110 | 0.44 | 30.5 | 35.5 | 81.0 | " |
| 4 | t-Butyl peroxy-benzoate | 8 | 120 | 0.44 | 27.9 | 32.2 | 83.1 | " |
| 5 | Di-t-butyl peroxide | 5 | 130 | 0.44 | 29.7 | 36.1 | 85.5 | " |

Example 6

The process is carried out in the same way as in Example 1 except that butyl acrylate is used instead of styrene and that polymerization is continued for 6 hours. Polyacrylic acid content, grafting degree and grafting efficiency are 17.9%, 18.6% and 85.0% respectively. A precipitate from the methylene chloride solution is not found after 48 hours.

Example 7

1,3-butadiene is used instead of the styrene used in Example 1. After deaeration 1,3-butadiene is introduced inot the reaction tube and a pressure of 1.5 kg/cm² is maintained inside the reaction tube. The precipitate from the methylene chloride solution is considered to be the portion soluble in toluene because the toluene insoluble portion is contained in the polymer obtained in a ratio of 51%. The polybutadiene content is determined not by an infrared spectroanalysis but by the elementary analysis of C, H and O. The polybutadiene content of the polymer obtained is 11.4%. A precipitate from the methylene chloride solution is not found after 48 hours.

Examples 8 to 13

A 150 ml autoclave is charged with 5 ml of styrene and poly-2,6-dimethylphenyl-1,4-ether ($\eta = 0.44$ in chloroform at 25°C) in which an initiator is adsorbed (in the same way as in Example 1). The resin is placed over the styrene so that they do not contact each other. The autoclave is deaerated and then nitrogen is introduced into the autoclave so that the pressure inside the autoclave is 0.13 bar higher than the vapour pressure of the monomer at the polymerization temperature. Then the autoclave is immersed in an oil bath adjusted to the polymerization temperature for 5 hours to carry out the polymerization. After polymerization the autoclave is cooled to room temperature and then the upper reaction mixture is taken out. This upper reaction mixture is washed with methanol and then dried under vacuum at 160°C for 4 hours. The determination of polystyrene content, grafting degree and grafting efficiency and the observation of the precipitation from the methylene chloride solution are carried out according to Reference example 1.

Table 3 shows the results of Examples 8 to 13 obtained under various conditions using different kinds and amounts of initiators and polymerization temperatures.

TABLE 3

| Example | Radical polymerization initiator | Amount of radical polymerization initiator (by weight) (%) | Polymerization temperature (°C) | Styrene content of the polymer (%) | Grafting degree of styrene (%) | Grafting efficiency of styrene (%) | Precipitation from the methylene chloride solution |
|---|---|---|---|---|---|---|---|
| 8 | Benzoyl peroxide | 5 | 90 | 25.9 | 30.3 | 86.5 | not found after 48 hours |
| 9 | t-Butyl peroxy-benzoate | 4 | 110 | 26.2 | 28.7 | 80.9 | " |
| 10 | t-Butyl peroxy-benzoate | 4 | 130 | 25.9 | 30.5 | 87.3 | " |
| 11 | t-Butyl peroxy-benzoate | 1 | 130 | 29.7 | 37.3 | 88.3 | " |
| 12 | D-t-butyl peroxide | 3 | 130 | 27.0 | 32.3 | 87.2 | " |
| 13 | Di-cumyl peroxide | 5 | 110 | 25.5 | 27.6 | 80.5 | " |
| 14 | Di-cumyl peroxide | 10 | 110 | 23.7 | 25.8 | 83.2 | " |

Example 15

The process is carried out in the same way as in Example 8 except that acrylonitrile is used as the grafting monomer and the polymerization temperature is 75°C. Dimethylformamide (DMF) in an amount of 50 times the reaction mixture is added to the reaction mixture and then the mixture is heated at 80°C for 4 hours under stirring to dissolve and remove free polyacrylonitrile. The free polyacrylonitrile is the polyacrylonitrile which is not graft-copolymerized to poly-2,6-dimethylphenylene-1,4-ether. 0.05 g of free polyacrylonitrile are separated. The results of an analysis for the graft copolymer are as follows:

| | |
|---|---|
| Acrylonitrile content | 36.3% by weight |
| Grafting degree of acrylonitrile | 56.9% |
| Grafting efficiency of acrylonitrile | 99.5% |

The graft copolymer obtained from which free polyacrylonitrile is removed is insoluble in methylene chloride and consequently precipitation from methylene chloride solution cannot be carried out. Therefore, the graft copolymer is extracted with chloroform in a Soxhlet extractor. A chloroform soluble portion is obtained in an amount of 0.8% by weight. An analysis shows that this chloroform soluble portion contains acrylonitrile in an amount of 4.3% by weight. Thus the free poly-2,6-dimethylphenylene-1,4-ether is present in an amount of 0.7% by weight or less.

Example 16

The process is carried out in the same way as in Example 10 except that a mixture of 4 g of styrene and 1 g of acrylonitrile is used as grafting monomer. The results are as follows:

| | |
|---|---|
| Increase in weight | 30.5% by weight |
| Grafting degree | 25.5% |
| Grafting efficiency | 83.6% |
| Acrylonitrile content of grafting branches | 10.5% |
| Precipitation from the methylene chloride solution | not found after 48 hours |

Example 17

The process is carried out in the same way as in Example 10 except that methyl methacrylate (MMA) is used as grafting monomer. The results are as follows:

| | |
|---|---|
| Polymethylmethacrylate | 32.5% by weight |
| Grafting degree | 48.1% |
| Grafting efficiency | 82.1% |
| Precipitation from the methylene chloride solution | not found after 48 hours |

Example 18

The process is carried out in the same way as in Example 10 except that a phenylene oxide copolymer ($\eta = 0.45$ in chloroform at 25°C) containing 55% 2,6-diethylphenyl which is obtained by the oxidation coupling copolymerization of a mixture of 2,6-dimethylphenol and 2,6-diethylphenol is used. The results are as follows:

| | |
|---|---|
| Styrene content | 25.6% by weight |
| Grafting degree | 30.1% |
| Grafting efficiency | 87.6% |
| Precipitation from the methylene choride solution | not found after 48 hours |

## Claims

1. A process for the preparation of polyphenylene oxide graft copolymers by graft copolymerization of a polyphenylene oxide with recurring structural units of the formula:

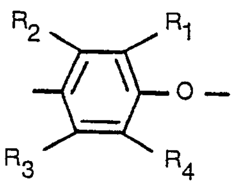

wherein $R_1$, $R_2$, $R_3$ and $R_4$ are each monovalent substituents selected from the group consisting of hydrogen, halogen, hydrocarbon groups, substituted hydrocarbon groups, hydrocarbonoxy groups, substituted hydrocarbonoxy groups, amino groups or substituted amino groups, with at least one radically polymerizable compound in the presence of a radical initiator, the weight ratio of the initiator to polyphenylene oxide being 0.2 to 30 parts per 100 parts polyphenylene oxide, the polyphenylene oxide being in the solid state and having been treated or mixed with the initiator prior to use, characterized in that a monomer in the gaseous state is passed over the polyphenylene oxide, the vapor pressure of the monomer being at least 0.066 bar at the polymerization temperature.

2. The process of claim 1, wherein said radically polymerizable compound is an ethylenically unsaturated monomer having up to 15 carbon atoms selected from the group consisting of aromatic vinyl compounds, alkyl acrylates or alkyl methacrylates, acrylonitrile or methacrylonitrile, carboxylic acids, butadiene and mixtures thereof.

3. The process of claim 2, wherein the ethylenically unsaturated monomer contains at least 5% by weight of an aromatic vinyl compound.

4. The process of claim 1, wherein said radically polymerizable compounds and the polyphenylene oxide are used in a weight ratio of at least about 5:100.

5. The process of claim 4, wherein the ethylenically unsaturated monomer(s) and the polyphenylene oxide are used in such a weight ratio that the graft copolymer contains from 5 to 95 weight% of said copolymerizable compound.

6. The process of claim 1, wherein said polyphenylene oxide has a molecular weight ($M_n$) of between 1200 to 200 000.

7. The process of claim 1, wherein said polyphenylene oxide is a poly (2,6-dimethylphenylene-1,4-ether).

8. The process of claim 1, wherein the polymerization is effected at a temperature between 20 to 150°C.

## Revendications

1. Procédé de préparation de copolymères greffés d'oxyde de polyphénylène par une copolymérisation par greffage d'un oxyde de polyphénylène comportant des mailles répétitives de la formule:

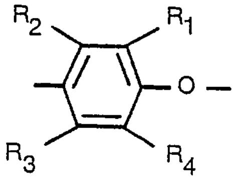

dans laquelle $R_1$, $R_2$, $R_3$ et $R_4$ sont chacun des substituants monovalents choisis dans le groupe comprenant l'hydrogène, les halogènes, les groupes hydrocarburés, les groupes hydrocarburés substitués, les groupes hydrocarbonoxy, les groupes hydrocarbonoxy substitués, les groupes amino ou les groupes amino substitués, avec au moins un composé pouvant subir une polymérisation radicalaire, en présence

d'un initiateur de radicaux, le rapport en poids de l'initiateur à l'oxyde de polyphénylène étant de 0,2 à 30 parties d'initiateur pour 100 parties d'oxyde de polyphénylène, ce dernier étant à l'étant solide et ayant été traité ou mélangé avec l'initiateur avant l'utilisation, caractérisé en ce que l'on fait passer un monomère à l'état gazeux sur l'oxyde de polyphénylène, la pression de vapeur du monomère étant d'au moins 0,066 bar à la température de polymérisation.

2. Procédé suivant la revendication 1, caractérisé en ce que le composé pouvant subir une polymérisation radicalaire est un monomère éthyléniquement insaturé comportant jusqu'à 15 atomes de carbone et choisi dans le groupe comprenant les composés vinyliques aromatiques, les acrylates d'alkyle ou les méthacrylates d'alkyle, l'acrylonitrile ou le méthacrylonitrile, les acides carboxyliques, le butadiène et leurs mélanges.

3. Procédé suivant la revendication 2, caractérisé en ce que le monomère éthyléniquement insaturé contient au moins 5% en poids d'un composé vinylique aromatique.

4. Procédé suivant la revendication 1, caractérisé en ce que les composés pouvant subir une polymérisation radicalaire et l'oxyde de polyphénylène s'utilisent dans un rapport en poids d'au moins environ 5/100.

5. Procédé suivant la revendication 4, caractérisé en ce que le ou les monomères éthyléniquement insaturés et l'oxyde de polyphénylène s'utilisent dans un rapport en poids tel que le copolymère greffé contienne 5 à 95% en poids de ce composé copolymérisable.

6. Procédé suivant la revendicaion 1, caractérisé en ce que l'oxyde de polyphénylène a un poids moléculaire ($M_n$) compris entre 1200 et 200.000.

7. Procédé suivant la revendication 1, caractérisé en ce que l'oxyde de polyphénylène est un poly (2,6-diméthylphénylène-1,4-éther).

8. Procédé suivant la revendication 1, caractérisé en ce que la polymérisation est réalisée à une température comprise entre 20 et 150°C.

**Patentansprüche**

1. Ein Verfahren zur Herstellung von Polyphenylenoxid-Pfropfcopolymerisation durch Pfropfcopolymerisation eines Polyphenylenoxids mit wiederkehrenden Struktureinheiten der Formel:

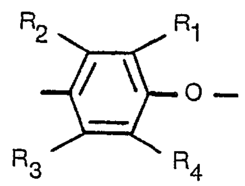

in der $R_1$, $R_2$, $R_3$ und $R_4$ jeweils einwertige Substituenten aus der Gruppe Wasserstoff, Halogen, Kohlenwasserstoffreste, substituierte Kohlenwasserstoffreste, Kohlenwasserstoffoxyreste, substituierte Kohlenwasserstoffoxyreste, Aminogruppen oder substituierte Aminogruppen darstellen, mit mindestens einer radikalisch polymerisierbaren Verbindung in Gegenwart eines radikalischen Initiators, wobei das Gewichtsverhältnis von Initiator zu Polyphenylenoxid 0,2 bis 30 Teile pro 100 Teile Polyphenylenoxid beträgt, das Polyphenylenoxid im festen Zustand vorliegt und mit dem Initiator vor der Verwendung behandelt oder vermischt worden ist, gekennzeichnet dadurch, daß ein Monomeres im gasförmigen Zustand über das Polyphenylenoxid geleitet wird, wobei der Dampfdruck des Monomeren mindestens 0,066 bar bei der Polymerisationstemperatur beträgt.

2. Verfahren nach Anspruch 1, wobei die radikalisch polymerisierbare Verbindung ein äthylenisch ungesättigtes Monomeres mit bis zu 15 Kohlenstoffatomen aus der Gruppe der aromatischen Vinylbindungen, Alkylacrylate oder Alkylmethacrylate, Acrylnitril oder Methacrylnitril, Carbonsäuren, Butadien und deren Gemische ist.

3. Verfahren nach Anspruch 2, wobei das äthylenisch ungesättigte Monomere mindestens 5 Gewichtsprozent einer aromatischen Vinylverbindung enthält.

4. Verfahren nach Anspruch 1, wobei die radikalisch polymerisierbaren Verbindung und das Polyphenylenoxid in einem Gewichtsverhältnis von mindestens etwa 5:100 verwendet werden.

5. Verfahren nach Anspruch 4, wobei das (die) äthylenisch ungesättigte(n) Monomere(n) und das Polyphenylenoxid in einem solchen Gewichtsverhältnis verwendet werden, daß das Pfropfcopolymerisat 5 bis 95 Gewichtsprozent der copolymerisierbaren Verbindung enthält.

6. Verfahren nach Anspruch 1, wobei der Polyphenylenoxid ein Molekulargewicht ($M_n$) von 1200 bis 200 000 hat.

7. Verfahren nach Anspruch 1, wobei der Polyphenylenoxid ein Poly-(2,6-dimethylphenylen-1,4-äther) ist.

8. Verfahren nach Anspruch 1, wobei die Polymerisation bei einer Temperatur von 20 bis 150°C durchgeführt wird.